# EUROPÄISCHE PATENTSCHRIFT

(11) **EP 2 845 973 B1**
(45) Veröffentlichungstag und Bekanntmachung des Hinweises auf die Patenterteilung: **07.10.2020**
(21) Anmeldenummer: 14182200.7
(22) Anmeldetag: 26.08.2014
(51) Int. Cl.: E05B 81/06, E05B 81/04, E05B 81/14, E05B 79/20, E05B 81/86, E05B 81/82, E05B 85/06, E05B 51/00, F03G 7/06, E05B 47/00

(54) **Kraftfahrzeugschloss**
Motor vehicle lock
Serrure de véhicule automobile

(30) Priorität: 05.09.2013 DE 202013007862 U
(43) Veröffentlichungstag der Anmeldung: 11.03.2015
(73) Patentinhaber: Brose Schliesssysteme GmbH & Co. KG, 42369 Wuppertal (DE)
(72) Erfinder: Grosser, Lutz, 40883 Ratingen (DE); Momberger, Christian, 42287 Wuppertal (DE); Hille, Martin, 42119 Wuppertal (DE)
(74) Vertreter: Gottschald, Jan

(56) Entgegenhaltungen:
- EP-A1- 1 279 784
- EP-A1- 1 300 532
- EP-A2- 2 336 465
- WO-A1-2007/140606
- US-A1- 2005 104 382
- US-A1- 2010 237 632

## Beschreibung

Die vorliegende Erfindung betrifft ein Kraftfahrzeugschloss gemäß dem Oberbegriff des Anspruchs 1.

Unter dem Begriff "Kraftfahrzeugschloss" ist primär ein Türschloss eines Kraftfahrzeugs zu verstehen. Jedoch kann es sich hierbei auch um ein Kofferraumschloss, um ein Haubenschloss, um ein Klappenschloss o. dgl. eines Kraftfahrzeugs handeln.

Aus der WO 98/37294 A1 ist ein Kraftfahrzeugschloss mit einer Schlossfalle, einer Sperrklinke zum Halten der Schlossfalle in mindestens einer Haltestellung, einem elektrischen Hauptantrieb zum Ausheben der Sperrklinke und einem Hilfsantrieb zum Ausheben der Sperrklinke bekannt. Bei Kraftfahrzeugschlössern mit einem elektrischen Hauptantrieb zur Öffnung des Kraftfahrzeugschlosses durch Ausheben der Sperrklinke ist es häufig gewünscht, dass zusätzlich zu diesem elektrischen Hauptantrieb ein weiterer, redundanter Hilfsantrieb vorhanden ist, mit dem die Sperrklinke im Notfalls ebenfalls ausgehoben und damit das Kraftfahrzeugschloss geöffnet werden kann. Gemäß diesem Stand der Technik ist ein erster elektrischer Stellantrieb vorgesehen, der mittels eines Stirnradgetriebes die Sperrklinke ausheben kann. Ferner ist ein zweiter elektrischer Stellantrieb vorgesehen, der durch ein weiteres Stirnradgetriebe, das das Aufbringen eines größeren Drehmoments erlaubt, in ein Zahnrad des erstgenannten Stirnradgetriebes eingreift und somit als Hilfsantrieb zum Ausheben der Sperrklinke eingesetzt werden kann. Ein entsprechendes Kraftfahrzeugschloss zeigt die US 2005/0104382 A1.

Nachteilig an dem obigen Stand der Technik ist neben dem Umstand, dass die beiden Antriebe nicht freilaufend zueinander sind, vor allem die Tatsache, dass die gezeigte Anordnung sowohl hinsichtlich der Getriebe als auch der beiden elektrischen Stellantriebe sowohl platzraubend als auch teuer ist, da zwei im Wesentlichen gleich dimensionierte elektrische Motoren vorgesehen sind.

Weiterhin sind Antriebe für das Ausheben der Sperrklinke bekannt, die als Formgedächtniselemente ausgestaltet sind (EP 1 279 784 A1, EP 1 300 532 A1). Der vorliegenden Erfindung liegt also das Problem zugrunde, ein aus dem Stand der Technik bekanntes Kraftfahrzeugschloss so weiterzuentwickeln, dass ein Hilfsantrieb zum Ausheben der Sperrklinke bereitgestellt wird, welcher sowohl platzsparend als auch mit niedrigeren Kosten realisiert werden kann.

Das obige Problem wird durch ein Kraftfahrzeugschloss gemäß Anspruch 1 gelöst. Vorteilhafte Weiterbildungen sind Gegenstand der Unteransprüche.

Der Erfindung liegt die Erkenntnis zugrunde, dass der Hilfsantrieb zum Ausheben der Sperrklinke regelmäßig nur in vergleichsweise seltenen Ausnahmesituationen eingesetzt werden muss, wie beispielsweise nach einem Crash, wenn möglicherweise die Kraft oder das Drehmoment des Hauptantriebs nicht ausreicht, um die Sperrklinke auszuheben. Entsprechend muss ein solcher Hilfsantrieb auch nur für eine geringere Zahl von Arbeitszyklen ausgelegt sein, welche Zahl regelmäßig mehrere Größenordnungen unter der geforderten Zahl von Arbeitszyklen des Hauptantriebs liegt. Die erfindungsgemäße Schlussfolgerung ist nun die, dass für den Hilfsantrieb eine Antriebsanordnung verwendet werden kann, welche hinsichtlich ihrer maximal möglichen Zyklenzahl begrenzt ist, aber dafür raum- und kostensparend realisiert werden kann. Erfindungsgemäß umfasst der Hilfsantrieb eine Formgedächtnisanordnung mit einem Formgedächtniselement, wobei die Sperrklinke durch eine Gestaltänderung des Formgedächtniselements ausgehoben wird.

Ein Formgedächtniselement besteht regelmäßig aus einer Legierung, die nach geeigneter Behandlung aufgrund einer martensitischen Umwandlung ihre Gestalt in Abhängigkeit etwa von der Temperatur oder von dem es umgebenden Magnetfeld ändert. Diese Umwandlung der Gestalt ist bei entsprechender Auslegung reversibel. Zu den hierfür infrage kommenden Legierungen zählen etwa Kupfer-Aluminium-Nickel, Kupfer-Zink-Aluminium, Nickel-Titan-Kupfer und Nickel-Titan.

Beim Formgedächtnisverhalten unterscheidet man zwischen dem Einwegeffekt und dem Zweiwegeffekt. Beim Einwegeffekt wird die ursprüngliche Form nach einer pseudoplastischen Verformung wieder angenommen, wenn eine Phasenumwandlung z. B. durch Erwärmung ausgelöst wird. Ein darauffolgendes Abkühlen verursacht keine Verformung mehr. Als Zweiwegeffekt bezeichnet man das Verhalten, bei dem sich ein Werkstoff z. B. sowohl bei Temperaturerhöhung als auch bei Abkühlung an seine jeweils vorherige Form erinnert.

Eine temperatursensitive Formgedächtnislegierung wird im Allgemeinen als "Shape-Memory-Alloy", kurz "SMA", genannt. Für eine magnetfeldsensitive Formgedächtnislegierung hat sich der Begriff "Magnetic-Shape-Memory-Alloy", kurz "MSM", eingebürgert.

Die bevorzugte Ausgestaltung des Unteranspruchs 2 betrifft die beiden Möglichkeiten, den Hauptantrieb und den Hilfsantrieb entweder seriell in einem einzelnen Antriebsstrang oder parallel in jeweils eigenen, zumindest teilweise separaten Antriebssträngen vorzunehmen.

Die bevorzugten Ausgestaltungen der Unteransprüche 3 bis 8 sehen eine Isolieranordnung zur Temperaturisolierung des Formgedächtniselements vor. Bei temperatursensitiven Formgedächtniselementen erfolgt der Übergang von der Martensit-Struktur zu der Austenit-Kristallform, durch welche eine Gestaltänderung begründet wird, bei Erreichen bzw. Übersteigen einer entsprechenden Starttemperatur für diese Umwandlung. Während des Erhitzens des Formgedächtniselements gibt dieses aber grundsätzlich Wärme entweder durch Wärmeströmung, z. B. an die umgebende Luft, durch Wärmeleitung oder durch Wärmestrahlung ab. Je größer diese Wärmeverluste sind, umso länger dauert das Erreichen der Starttemperatur für die angestrebte Gestaltänderung und umso mehr Energie muss insgesamt zu diesem Zweck aufgewandt werden. Folglich kann sowohl die für die Gestaltänderung - und damit zum Ausheben der Sperrklinke - benötigte Zeit als auch die hierzu erforderliche Energie verringert werden, wenn die Isolieranordnung die Wärmeabgabe des Formgedächtniselements, insbesondere während eines Erhitzungsvorgangs, verhindert bzw. reduziert.

Die weitere Ausgestaltung der bevorzugten Unteransprüche 4 bis 6 betrifft dabei vorteilhafte Anordnungen der Isolieranordnung in Bezug auf das Formgedächtniselement. Die bevorzugte Ausgestaltung des Unteranspruchs 7 wiederum betrifft bevorzugte Materialien zur Verwendung in der Isolieranordnung und die bevorzugte Ausgestaltung des Unteranspruchs 8 schlägt eine Endisolierung an mindestens einem Ende des Formgedächtniselements vor.

Die bevorzugten Ausgestaltungen der Unteransprüche 13 und 14 betreffen eine Übertragungsanordnung, mit welcher eine Gestaltänderung der Formgedächtnisanordnung in die Aushebebewegung der Sperrklinke umgewandelt werden kann, wobei durch diese Übertragungsanordnung gewünschte "Übersetzungen" zwischen dem Gestaltänderungsverhalten des Formgedächtniselements und dem Weg oder der Kraft für das Ausheben der Sperrklinke realisiert werden können.

Schließlich betrifft der Unteranspruch 15 eine Möglichkeit, das Formgedächtniselement von der Sperrklinke antriebstechnisch zu entkoppeln, sodass trotz Beibehaltung der Gestaltänderung des Formgedächtniselements die Sperrklinke wieder einfallen kann.

Weitere Vorteile, Merkmale, Eigenschaften und Aspekte der vorliegenden Erfindung ergeben sich aus der lediglich Ausführungsbeispiele darstellenden Beschreibung anhand der Zeichnung. Es zeigt
- Fig. 1: ein erstes Ausführungsbeispiel eines vorschlagsgemäßen Kraftfahrzeugschlosses bei in einer Hauptraststellung befindlicher Schlossfalle und eingefallener Sperrklinke,
- Fig. 2: das Kraftfahrzeugschloss gemäß Fig. 1 bei in Öffnungsstellung befindlicher Schlossfalle, wobei die Sperrklinke durch den Hauptantrieb ausgehoben wurde,
- Fig. 3: das Kraftfahrzeugschloss gemäß Fig. 1 und 2 bei in der Öffnungsstellung befindlicher Schlossfalle, wobei die Sperrklinke durch den Hilfsantrieb ausgehoben wurde,
- Fig. 4: das Kraftfahrzeugschloss gemäß der Fig. 1 bis 3 bei in der Hauptraststellung befindlicher Schlossfalle und eingefallener Sperrklinke, wobei der Hilfsantrieb von der Sperrklinke entkoppelt wurde und
- Fig. 5: ein vorschlagsgemäßes Kraftfahrzeugschloss in einer zweiten Ausführungsform bei in der Hauptraststellung befindlicher Schlossfalle und eingefallener Sperrklinke.

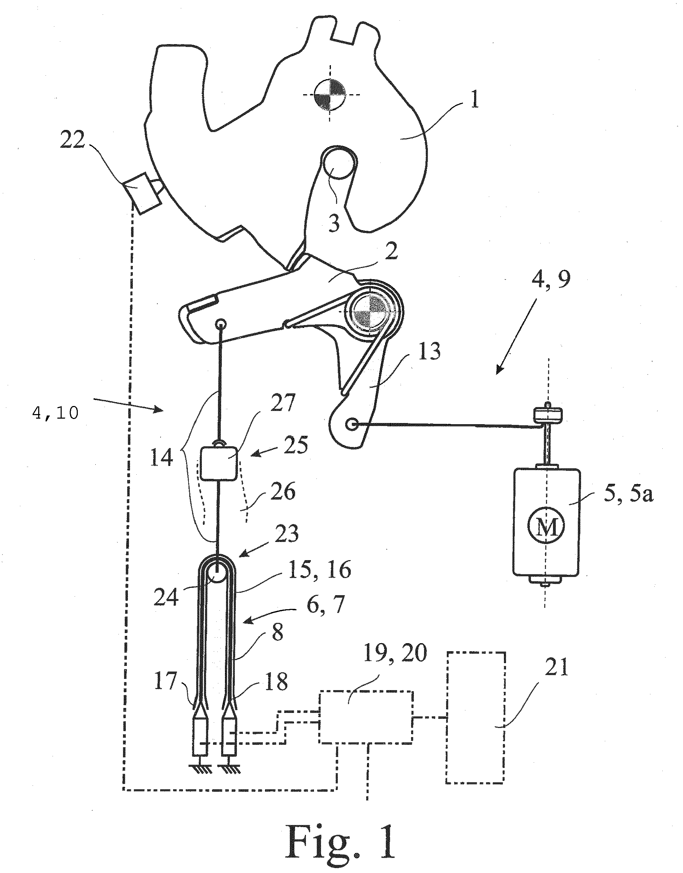

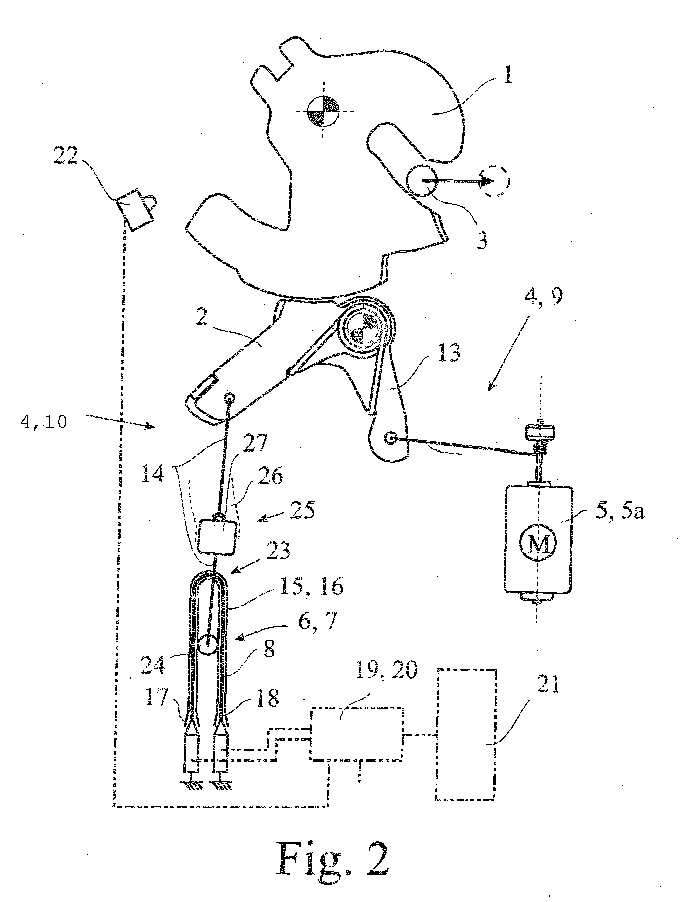

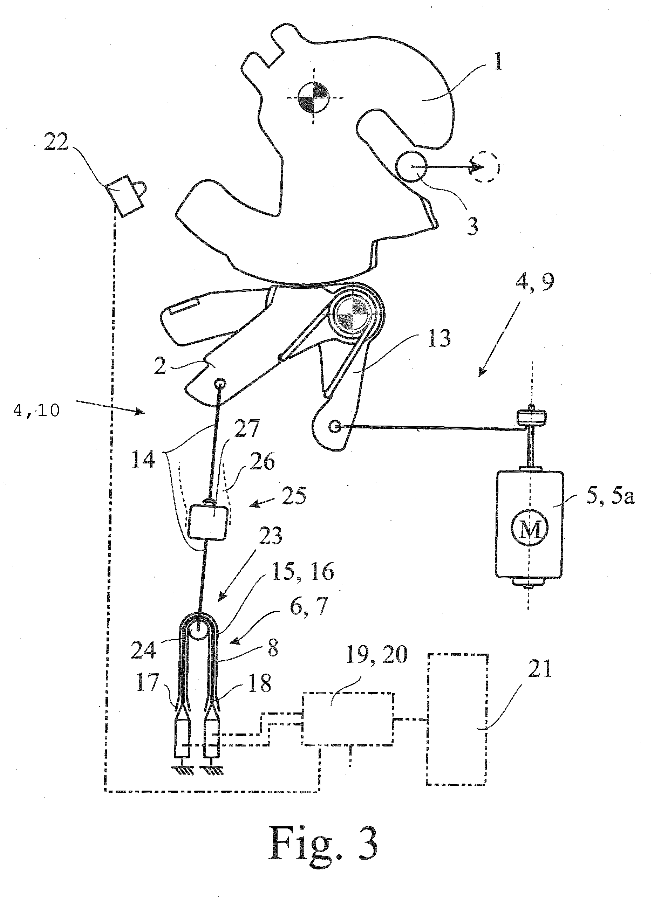

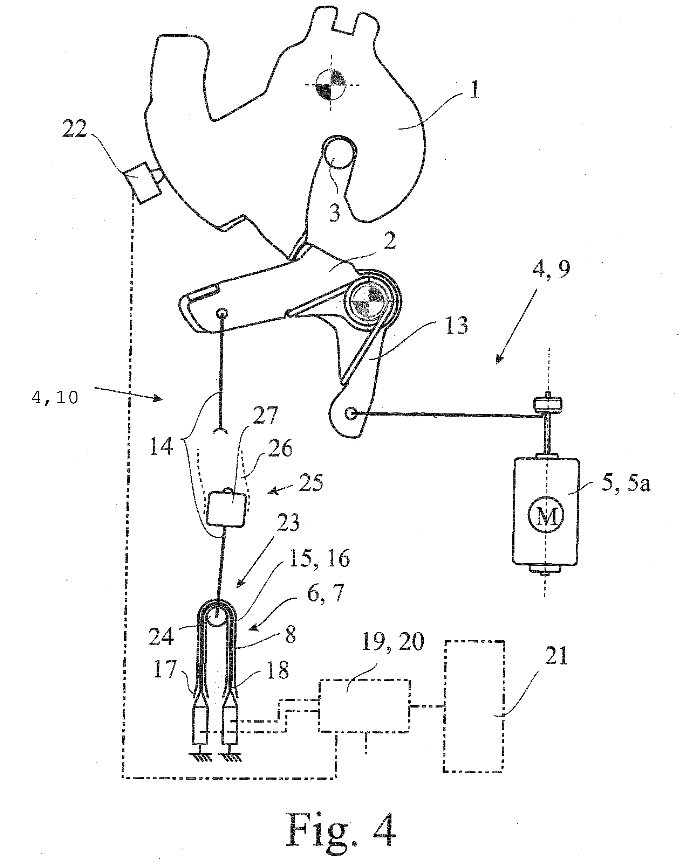

Die in den Fig. 1 bis 5 dargestellten Ausführungsbeispiele eines vorschlagsgemäßen Kraftfahrzeugschlosses sind mit den Schließelementen Schlossfalle 1 und Sperrklinke 2 zum Halten der Schlossfalle 1 in mindestens einer Haltestellung ausgestattet. Die Schlossfalle 1 ist dabei in eine Öffnungsstellung, die in den Fig. 2 und 3 dargestellt ist und in mindestens eine Haltestellung bringbar, wobei die mindestens eine Haltestellung hier und vorzugsweise eine Vorraststellung, welche hier nicht dargestellt ist, sowie eine Hauptraststellung, die in den Fig. 1, 4 und 5 wiedergegeben ist, umfasst. Die Schlossfalle 1 kann in Eingriff mit einem Schließkeil 3 o. dgl. gebracht werden, wobei die Schlossfalle 1 in der mindestens einen Haltestellung den Schließkeil 3 festhält und in der Öffnungsstellung den Schließkeil 3 freigibt. Die Schlossfalle 1 ist vorzugsweise in Richtung ihrer Öffnungsstellung vorgespannt.

Die Sperrklinke 2 des vorschlagsgemäßen Kraftfahrzeugschlosses ist in eine eingefallene Stellung, dargestellt in den Fig. 1, 4 und 5, sowie in eine ausgehobene Stellung, dargestellt in den Fig. 2 und 3, bringbar, wobei die Sperrklinke 2 in ihrer eingefallenen Stellung die Schlossfalle 1 in der mindestens einen Haltestellung hält und wobei die Sperrklinke 2 in ihrer ausgehobenen Stellung die Schlossfalle 1 in Richtung ihrer Öffnungsstellung freigibt.

Das vorschlagsgemäße Kraftfahrzeugschloss weist eine Antriebsstrangordnung 4 auf, welche einen elektrischen Hauptantrieb 5 zum Ausheben der Sperrklinke 2 und einen Hilfsantrieb 6 zum Ausheben der Sperrklinke 2 umfasst. Die Antriebsstranganordnung 4 ist also dazu eingerichtet, sowohl eine Bewegung des elektrischen Hauptantriebs 5 als auch eine Bewegung des Hilfsantriebs 6 so zu übertragen, dass jeweils ein Ausheben der Sperrklinke 2 bewirkt wird. Bei dem elektrischen Hauptantrieb 5 handelt es sich um einen Elektromotor 5a.

Das vorschlagsgemäße Kraftfahrzeugschloss ist nun dadurch gekennzeichnet, dass der Hilfsantrieb 6 eine Formgedächtnisanordnung 7 mit einem Formgedächtniselement 8 zum Ausheben der Sperrklinke 2 durch eine Gestaltänderung des Formgedächtniselements 8 umfasst. Bei einem Formgedächtniselement 8 aus einer Formgedächtnislegierung entspricht die Gestaltänderung einem vollständigen oder teilweisen Übergang aus der Hochtemperaturphase Austenit in die Niedertemperaturphase Martensit oder einem Übergang in der umgekehrten Richtung. Ebenso kann im Falle eines Formgedächtnispolymers als Bestandteil des Formgedächtniselements 8 eine entsprechende Veränderung des Polymers die Gestaltänderung und damit das Ausheben der Sperrklinke 2 bewirken. Die Gestaltänderung des Formgedächtniselements 8 ist also ursächlich für diejenige Bewegung des Hilfsantriebs 6, durch welche die Sperrklinke 2 mittels der Antriebsstranganordnung 4 ausgehoben wird. Die Formgedächtnisanordnung 7 kann hierbei mehrere Formgedächtniselemente 8 umfassen. Ebenso kann das Formgedächtniselement 8 auch mehrteilig sein.

Gemäß dem ersten Ausführungsbeispiel der Fig. 1 bis 4 ist es bevorzugt, dass die Antriebsstranganordnung 4 einen Hauptantriebsstrang 9 mit dem Hauptantrieb 5 und einen Hilfsantriebsstrang 10 mit dem Hilfsantrieb 6 umfasst. Es sind also zwei Antriebsstränge, nämlich der Hauptantriebsstrang 9 und der Hilfsantriebsstrang 10 vorgesehen, welche parallel und nebeneinander verlaufen. Grundsätzlich können der Hauptantriebsstrang 9 und der Hilfsantriebsstrang 10 innerhalb der Antriebsstranganordnung 4 auch vor der jeweiligen antriebstechnischen Kopplung an die Sperrklinke 2 zusammengeführt werden. Sie können aber auch, wie im ersten Ausführungsbeispiel dargestellt, eine bis zur Sperrklinke 2 voneinander getrennte Wirkkette aufweisen. Speziell greift im ersten Ausführungsbeispiel der Hauptantriebsstrang 9 mit seiner von dem Hauptantrieb 5 wickelbaren Hauptzugvorrichtung 11 an einen Sperrklinkenhebel 13 ein, welcher so in Eingriff mit der Sperrklinke 2 steht, dass durch seine Betätigung die Sperrklinke 2 ausgehoben werden kann. Hingegen greift der Hilfsantriebsstrang 10 mit seiner Hilfszugvorrichtung direkt an der Sperrklinke 2 an.

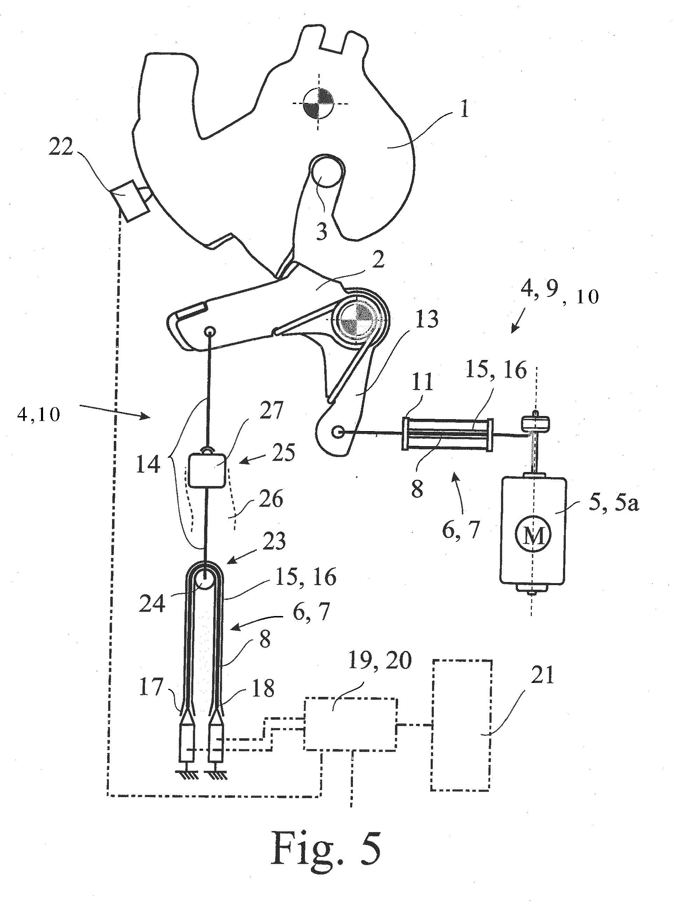

Gemäß dem zweiten Ausführungsbeispiel ist es ebenso bevorzugt, dass die Antriebsstranganordnung 4 einen Hauptantriebsstrang 9 mit einer seriellen Anordnung des Hauptantriebs 5 und des Hilfsantriebs 6 umfasst. Diese Ausgestaltung entspricht dem zweiten Ausführungsbeispiel, welches in der Fig. 5 dargestellt ist und bei welchem sowohl eine Bewegung des Hauptantriebs 5 als auch eine Bewegung des Hilfsantriebs 6 über denselben Antriebsstrang, nämlich hier über den Hauptantriebsstrang 9, auf die Sperrklinke 2 derart übertragen wird, dass sie ausgehoben wird. Wie aus der Fig. 5 hervorgeht, wird der Hilfsantrieb 6 durch eine Bewegung des Hauptantriebs 5 mitbewegt. Speziell ist auch hier eine Hauptzugvorrichtung 11 an dem Hauptantrieb 5 befestigt, welche zumindest teilweise aufgewickelt werden und dadurch den Hilfsantrieb 6 ziehen kann. Die Hauptzugvorrichtung 11 ist ferner an der Sperrklinke 2 befestigt.

Der an der Hauptzugvorrichtung 11 angeordnete Hilfsantrieb 6 weist nun ein Zugelement 14 mit einer Formgedächtnisanordnung 7 auf, welche das Formgedächtniselement 8 umfasst. Ferner umfasst das Zugelement 14 zwei parallel zu dem Formgedächtniselement 8 angeordnete Zugseile. Wird nur der Hauptantrieb 5 betätigt, so wird über eine teilweise Aufwicklung der Hauptzugvorrichtung 11 die Sperrklinke 2 gezogen und ausgehoben, wobei das Zugelement 14 ohne Längenveränderung mitbewegt wird. Die Zugkraft wird hierbei im Wesentlichen durch die Zugseile übertragen. Erfolgt keine Betätigung des Hauptantriebs 5, sondern lediglich eine Betätigung des Hilfsantriebs 6, so erfolgt eine Gestaltänderung des Formgedächtniselements 8 durch eine Längenverkürzung, welche auch in einer Längenverkürzung des Zugelements 14 insgesamt resultiert und damit ebenfalls zu einem Ausheben der Sperrklinke 2 führt.

Bevorzugt ist nun, dass die Formgedächtnisanordnung 7 eine Isolieranordnung 15 zur Temperaturisolierung des Formgedächtniselements 8 umfasst. Diese Isolieranordnung 15 kann dazu eingerichtet sein, eine oder mehrere der Wärmeverlustmechanismen der Konvektion, der Wärmeleitung und der Wärmeabstrahlung zu verringern oder gänzlich zu verhindern. Wie in der Zeichnung für beide Ausführungsbeispiele dargestellt, ist das Formgedächtniselement 8 vorzugsweise länglich und hier insbesondere drahtartig ausgeformt. Entsprechend ist bevorzugt, dass wie in der Zeichnung dargestellt die Isolieranordnung 15 das Formgedächtniselement 8 unmittelbar ggf. bis auf ein Spiel entlang einer Längsrichtung einhüllt, wodurch eine besonders gute Isolierwirkung gewährleistet wird. Dies kann insbesondere dadurch verwirklicht werden, dass die Isolieranordnung 15 einen um das Formgedächtniselement 8 angeordneten Isolierschlauch 16 umfasst oder aus diesem Isolierschlauch 16 besteht. Die Isolieranordnung 15 kann auch das Formgedächtniselement 8 vor thermischen Einflüssen aus der Umgebung schützen.

Um die Gestaltänderung des Formgedächtniselements 8 nicht durch die Isolieranordnung 15 zu behindern, ist bevorzugt vorgesehen, dass die Isolieranordnung 15 und insbesondere der Isolierschlauch 16 entlang einer Richtung, und zwar vorzugsweise entlang der Längsrichtung, schwimmend zu dem Formgedächtniselement 8 angeordnet ist. Dies kann auch dadurch verwirklicht sein, dass das Formgedächtniselement 8 zur Isolieranordnung 15 bzw. zum Isolierschlauch 16 verschiebbar angeordnet ist.

Die Isolieranordnung 15, insbesondere der Isolierschlauch 16, kann auch an einem Gehäuse des Kraftfahrzeugschlosses befestigt sein. Dies kann insbesondere dadurch geschehen, dass die Formgedächtnisanordnung 7 durch ein Einklemmen der Isolieranordnung 15 und insbesondere des Isolierschlauchs 16 an dem Gehäuse des Kraftfahrzeugschlosses befestigt ist. Auf diese Weise kann sowohl die Isolieranordnung 15 als auch das Formgedächtniselement 8 an dem Kraftfahrzeugschloss befestigt werden, ohne dass es einer Kontaktierung zwischen dem Gehäuse und dem Formgedächtniselement 8 bedarf, welche Kontaktierung möglicherweise zu Wärmeverlusten des Formgedächtniselements 8 führen könnte.

Bezüglich der Bestandteile der Isolieranordnung 15 und insbesondere des Isolierschlauchs 16 ist bevorzugt, dass die Isolieranordnung 15 eine Textillage umfasst, welche vorzugsweise beschichtet und insbesondere mit Silikonkautschuk beschichtet ist. Die Beschichtung mit Silikonkautschuk ergänzt damit die umfassende Isolierung der grundsätzlich porösen Textillage. Möglich ist auch eine Beschichtung mit Polyurethan. Eine solche Textillage kann auch aus mehreren einzelnen und folglich separaten Lagen oder Schichten bestehen. Die Textillage kann bevorzugt eine Gewebelage oder eine Geflechtlage umfassen. Ebenso denkbar ist eine andere Textilart oder eine Kombination der genannten oder weiterer Textilarten. Bevorzugt ist für die Textillage vorgesehen, dass sie Glasseide umfasst. Ebenso kann die genannte Gewebelage eine Glasgewebelage oder Glasgeflechtlage sein.

Es kann die Isolierordnung 15, insbesondere der Isolierschlauch 16, auch eine Silikonlage umfassen und hier auch insbesondere aus Silikon bestehen. Bei dem Isolierschlauch 16 kann es sich auch um einen Schrumpfschlauch handeln. Alternativ kann die Isolieranordnung 15 auch Schaummaterial umfassen oder aus Schaummaterial bestehen.

Um zu verhindern, dass ein Wärmeverlust an einem Elementende 18 des Formgedächtniselements 8 auftritt, ist bevorzugt vorgesehen, dass die Isolieranordnung 15 eine jeweilige Endisolierung 17 für mindestens ein Elementende 18, vorzugsweise beide Elementenden 18, des Formgedächtniselements 8 umfasst. Hier kann die Isolieranordnung 15 und vorzugsweise der Isolierschlauch 16 einstückig ausgebildet sein, wodurch auch eine solche Endisolierung 17 mit einbegriffen wäre. Die Endisolierung 17 kann, insbesondere wenn die Isolieranordnung 15 und/oder die Formgedächtnisanordnung 7 an dem Gehäuse befestigt ist, auch eine Isolierung zwischen dem Gehäuse und dem Formgedächtniselement 8 bereitstellen.

Bevorzugt ist, dass die Gestaltänderung eine Längenveränderung des Formgedächtniselements 8 und insbesondere eine Längenverkürzung des Formgedächtniselements 8 umfasst. Die Längenveränderung des Formgedächtniselements 8 kann vorzugsweise bis zu 8 % der Gesamtlänge des Formgedächtniselements 8 betragen, wobei hier die absolute Längenveränderung regelmäßig und bevorzugt im Bereich zwischen 4 mm und 7 mm, insbesondere im Wesentlichen bei 6 mm, liegt.

Wie bereits angedeutet ist es bevorzugt, dass die Gestaltänderung des Formgedächtniselements 8 durch eine Temperaturänderung bewirkt wird. Insbesondere kann diejenige Gestaltänderung des Formgedächtniselements 8, welche zu dem Ausheben der Sperrklinke 2 führt, durch ein Erhitzen des Formgedächtniselements 8 und folglich durch eine Temperatursteigerung bewirkt werden. Die Temperatur, ab welcher die Gestaltänderung des Formgedächtniselements 8 eintritt oder beginnt, kann dabei in einem Bereich zwischen 80° C oder 100° C und 160° C liegen, vorzugsweise zwischen 130° C bis 140° C. Durch eine angestrebte Temperaturänderung auf im Wesentlichen 160°C kann die Gestaltänderung des Formgedächtniselements zuverlässig erreicht werden.

Zum Bewirken dieser Temperaturänderung ist es bevorzugt vorgesehen, dass das Kraftfahrzeugschloss eine Heizanordnung 19, welche vorzugsweise und wie in der Zeichnung dargestellt eine Spannungsquelle 20 umfasst, für eine Temperaturänderung des Formgedächtniselements 8 aufweist. Alternativ oder zusätzlich kann die Heizanordnung 19 auch eine Heizspule umfassen. Diese Heizanordnung 19 kann nun entweder für eine vorgegebene Zeit das Formgedächtniselement 8 beheizen oder aber gemäß den Ausführungsbeispielen diesen Vorgang durchführen, bis ein bevorzugt vorgesehener Schlossfallensensor 22 eine Öffnung der Schlossfalle 1 registriert. Die elektrische Leistung, die bei einer Spannungsquelle 20 als Heizanordnung 19 des Formgedächtniselements 8 vorgesehen ist, liegt regelmäßig im Bereich zwischen 50 Watt und 300 Watt, wobei bei einer Nennspannung von 12 Watt insbesondere eine Stromabgabe von im Wesentlichen 12 Ampere für die Temperaturänderung des Formgedächtniselements 8 vorgesehen sein kann. Die Zeitdauer, über welche diese Strom- und Leistungsabgabe zur Temperaturänderung stattfindet, liegt, bevorzugt zwischen 500 ms und 6 Sekunden.

Besonders bevorzugt ist es, dass die Heizanordnung 19 auch das Formgedächtniselement 8 umfasst und speziell das Formgedächtniselement 8 als Heizdraht dient. In diesem Fall wird das Formgedächtniselement 8 durch einen ihn durchfließenden elektrischen Strom, welcher etwa durch die Spannungsquelle 20 gespeist wird, erhitzt. Die Elementenden 18 bilden dann bevorzugt die elektrischen Kontakte für einen Stromfluss durch das Formgedächtniselement 8. Eine bevorzugt vorgesehene Endisolierung 17 kann vorzugsweise auch die elektrischen Kontakte zur Verhinderung oder Verringerung einer Wärmeabgabe isolieren.

Um die obige Heizanordnung 19 möglichst unabhängig von einer zentralen Energieversorgung des Kraftfahrzeugs und insbesondere einer Autobatterie zu halten, ist bevorzugt vorgesehen, dass das Kraftfahrzeugschloss eine lokale elektrische Energiequelle 21, bei der es sich insbesondere um eine lokale Kondensatoranordnung 22 handeln kann, zur Versorgung der Heizanordnung 19 aufweist. Auf diese Weise kann die Temperaturänderung des Formgedächtniselements 8 und damit das Ausheben der Sperrklinke 2 auch dann erreicht werden, wenn eine Stromversorgung durch die Autobatterie am Kraftfahrzeugschloss nicht oder nicht mehr zur Verfügung steht.

Es ist weiterhin vorteilhafterweise vorgesehen, dass die Antriebsstranganordnung 4 und insbesondere der Hilfsantriebsstrang 10 eine Übertragungsanordnung 23 zum Übertragen der Gestaltänderung des Formgedächtniselements 8 in eine Aushebebewegung der Sperrklinke 2 aufweist. Diese Übertragungsanordnung 23 kann etwa ein Hebel- oder ein Seilgetriebe umfassen.

Bevorzugt ist es gemäß dem ersten Ausführungsbeispiel der Fig. 1 bis 4 ferner, dass die Übertragungsanordnung 23, welche nachfolgend detaillierter beschrieben wird, einen Umlenkstift 24 umfasst.

Bevorzugt ist es weiter, dass die Übertragungsanordnung 23 und hier speziell der Umlenkstift 24 mit der Formgedächtnisanordnung 7 umlenkend in Eingriff steht. Damit kein Wärmeverlust über diesen Eingriff stattfindet, ist es weiter bevorzugt, dass die Isolieranordnung 15 die Übertragungsanordnung 23 von dem Formgedächtniselement 8 isoliert. Wie aus den Fig. 1 bis 4 hervorgeht, führt eine Längenverkürzung des Formgedächtniselements 8 dazu, dass das Zugelement 14, welches mit dem Umlenkstift 24 gekoppelt ist, eine Zugkraft auf die Sperrklinke 2 zum Ausheben der Sperrklinke 2 ausübt.

Eine bevorzugte Ausgestaltung sieht vor, wie es etwa im zweiten Ausführungsbeispiel der Fig. 5 der Fall ist, dass eine durch die Längenverkürzung des Formgedächtniselements 8 bewirkte Zugkraft im Formgedächtniselement 8 zu einer entsprechenden Zugkraft auf die Sperrklinke 2 oder den Sperrklinkenhebel 13 führt. Die maximal mögliche Zugkraft im Formgedächtniselement 8 ist regelmäßig durch die Dimensionierung und die Materialeigenschaften des Formgedächtniselements begrenzt.

Um hier eine Übersetzung der Zugkraft des Formgedächtniselements 8 in diesem Sinne gegenüber einer auf die Übertragungsanordnung 23 ausgeübte Bewegungskraft zu erreichen, ist es - wie im ersten Ausführungsbeispiel - bevorzugt vorgesehen, dass die Formgedächtnisanordnung 7 mit der Ubertragungsanordnung 23 derart und insbesondere mehrfach angekoppelt ist, dass eine auf die Übertragungsanordnung 23 durch die Formgedächtnisanordnung 7 ausgeübte Bewegungskraft größer als eine Zugkraft des Formgedächtniselements 8 ist.

Unter der Bewegungskraft in diesem Sinne ist diejenige Kraft zu verstehen, welche eine Bewegung der Übertragungsanordnung 23 bewirkt und welche im vorliegenden ersten Ausführungsbeispiel über das Zugelement 14 auf die Sperrklinke 2 zum Ausheben der Sperrklinke 2 übertragen wird. Dabei kann eine solche auf die Sperrklinke 2 ausgeübte Bewegungskraft grundsätzlich nicht nur als Zugkraft, sondern auch als Druckkraft auf die Sperrklinke 2 wirken. Die Zugkraft des Formgedächtniselements 8 im vorliegenden Sinne ist die auf einen Querschnitt des Formgedächtniselements 8 insgesamt wirkende Zugkraft. Im Falle, dass das Formgedächtniselement 8 aus mehreren einzelnen Abschnitten besteht oder diese umfasst, handelt es sich dabei um diejenige Zugkraft, die maximal in einem Querschnitt eines solchen Abschnitts wirkt.

Zu erkennen ist, dass durch die in den Fig. 1 bis 4 dargestellte und bevorzugte Anordnung des Formgedächtniselements 8 um den Umlenkstift 24 der Übertragungsanordnung 23, bei welcher das Formgedächtniselement 8 um im Wesentlichen 180° umgelenkt wird, die Bewegungskraft im obigen Sinne doppelt so groß ist wie die Zugkraft, ebenfalls im oben genannten Sinne. Ein ähnlicher oder identischer Effekt ließe sich auch durch eine Fixierung eines umgelenkten Formgedächtniselements 8 an der Übertragungsanordnung 23 oder durch das Vorsehen von einzelnen, unabhängig nebeneinander angeordneten Abschnitten als Bestandteil eines zusammengesetzten Formgedächtniselements 8 an der Übertragungsanordnung 23 erreichen.

Ebenso ist besonders bevorzugt, dass, wie in dem ersten Ausführungsbeispiel dargestellt, die Formgedächtnisanordnung 7 und insbesondere das Formgedächtniselement 8 beidseitig befestigt ist. Da regelmäßig, insbesondere wenn das Formgedächtniselement 8 als Heizdraht dient, elektrische Anschlüsse der Heizanordnung 19 und speziell der Spannungsquelle 20 an den Elementenden 18 des Formgedächtniselements 8 angeordnet sind, entfällt auf diese Weise die Notwendigkeit, diese elektrischen Anschlüsse bewegen zu müssen.

Schließlich ist es bevorzugt, dass die Übertragungsanordnung 23 eine Entkopplungsanordnung 25 umfasst, durch welche Entkopplungsanordnung 25 der Hauptantrieb 5 und alternativ oder zusätzlich der Hilfsantrieb 6 antriebstechnisch von der Sperrklinke 2 entkoppelt werden kann. Im ersten Ausführungsbeispiel umfasst die Entkopplungsanordnung 25 ein in einer Entkoppelführung 26 angeordnetes und nicht näher detailliertes Koppelglied 27 mit einer lösbaren Verbindung zu dem Zugelement 14. Vorzugsweise kann die Entkoppelführung 26 dabei durch die Formgedächtnisanordnung 7 gebildet sein.

Nach einer Temperaturänderung und der entsprechenden Gestaltänderung des Formgedächtniselements 8 durch eine Längenverkürzung würde regelmäßig die Sperrklinke 2 ausgehoben bleiben, bis durch ein Abkühlen des Formgedächtniselements 8 die durch die Temperaturänderung bewirkte Gestaltänderung und also die Längenverkürzung wieder rückgängig gemacht wird, wodurch die Sperrklinke 2 wieder freigegeben werden würde. Die bevorzugt vorgesehene Isolieranordnung 15 würde jedoch auch ein solches Abkühlen des Formgedächtniselements 8 verzögern. Die bevorzugt vorgesehene Entkopplungsanordnung 25 bietet nun die Möglichkeit, die Sperrklinke 2 freizugeben, ohne das Abkühlen des Formgedächtniselements 8 abwarten zu müssen. Denkbar ist auch, dass die Entkopplungsanordnung 25 durch eine Zerstörung etwa der Übertragungsanordnung 23, hier insbesondere durch ein Durchtrennen des Zugelements 14, den Hilfsantrieb 6 dauerhaft von der Sperrklinke 2 entkoppelt.

Ebenso kann das Kraftfahrzeugschloss eine Rückstellvorrichtung zur mechanischen, insbesondere automatischen oder manuellen, Rückbewegung der Formgedächtnisanordnung 7 oder zu einer mechanischen Reversion der Gestaltänderung des Formgedächtniselements 8 umfassen.

## Patentansprüche

1. Kraftfahrzeugschloss mit einer Schlossfalle (1), einer Sperrklinke (2) zum Halten der Schlossfalle (1) in mindestens einer Haltestellung, und einer Antriebsstranganordnung (4), welche einen elektrischen Hauptantrieb (5) zum Ausheben der Sperrklinke (2) und einen Hilfsantrieb (6) zum Ausheben der Sperrklinke (2) umfasst, wobei der Hauptantrieb (5) als Elektromotor ausgestaltet ist, **dadurch gekennzeichnet,**
**dass** der Hilfsantrieb (6) eine Formgedächtnisanordnung (7) mit einem Formgedächtniselement (8) zum Ausheben der Sperrklinke (2) durch eine Gestaltänderung des Formgedächtniselements (8) umfasst.

2. Kraftfahrzeugschloss nach Anspruch 1, **dadurch gekennzeichnet, dass** die Antriebsstranganordnung (4) einen Hauptantriebsstrang (9) mit dem Hauptantrieb (5) und einen Hilfsantriebsstrang (10) mit dem Hilfsantrieb (6) umfasst und/oder dass die Antriebsstranganordnung (4) einen Hauptantriebsstrang (9) mit einer seriellen Anordnung des Hauptantriebs (5) und des Hilfsantriebs (6) umfasst.

3. Kraftfahrzeugschloss nach Anspruch 1 oder 2, **dadurch gekennzeichnet, dass** die Formgedächtnisanordnung (7) eine Isolieranordnung (15) zur Temperaturisolierung des Formgedächtniselements (8) umfasst.

4. Kraftfahrzeugschloss nach Anspruch 3, **dadurch gekennzeichnet, dass** die Isolieranordnung (15) unmittelbar, ggf. bis auf ein Spiel, das Formgedächtniselement (8) entlang einer Längsrichtung einhüllt, vorzugsweise, dass die Isolieranordnung (15) einen um das Formgedächtniselement (8) angeordneten Isolierschlauch (16) umfasst.

5. Kraftfahrzeugschloss nach Anspruch 3 oder 4, **dadurch gekennzeichnet, dass** die Isolieranordnung (15), vorzugsweise der Isolierschlauch (16), entlang einer Richtung, vorzugsweise entlang der Längsrichtung, schwimmend zu dem Formgedächtniselement (8) angeordnet ist.

6. Kraftfahrzeugschloss nach einem der Ansprüche 3 bis 5, **dadurch gekennzeichnet, dass** die Isolieranordnung (15), vorzugsweise der Isolierschlauch (16), an einem Gehäuse des Kraftfahrzeugschlosses befestigt ist, insbesondere, dass die Formgedächtnisanordnung (7) durch ein Einklemmen der Isolieranordnung (15), vorzugsweise des Isolierschlauchs (16), an dem Gehäuse des Kraftfahrzeugschlosses befestigt ist.

7. Kraftfahrzeugschloss nach einem der Ansprüche 3 bis 6, **dadurch gekennzeichnet, dass** die Isolieranordnung (15), insbesondere der Isolierschlauch (16), eine vorzugsweise beschichtete, insbesondere mit Silikonkautschuk beschichtete, Textillage, vorzugsweise mit einer Gewebelage oder mit einer Geflechtlage, umfasst und/oder dass die Isolieranordnung (15), insbesondere der Isolierschlauch (16), eine Silikonlage umfasst, insbesondere aus Silikon besteht.

8. Kraftfahrzeugschloss nach einem der Ansprüche 3 bis 7, **dadurch gekennzeichnet, dass** die Isolieranordnung (15) eine Endisolierung (17) für mindestens ein Elementende (18), vorzugsweise beide Elementenden (18), des Formgedächtniselements (8) umfasst, insbesondere, dass die Isolieranordnung (15), vorzugsweise der Isolierschlauch (16), einstückig ausgebildet ist.

9. Kraftfahrzeugschloss nach einem der Ansprüche 1 bis 8, **dadurch gekennzeichnet, dass** das Formgedächtniselement (8) länglich geformt ist, vorzugsweise, dass die Gestaltänderung eine Längenveränderung, insbesondere eine Längenverkürzung, des Formgedächtniselements (8) umfasst.

10. Kraftfahrzeugschloss nach einem der Ansprüche 1 bis 9, **dadurch gekennzeichnet, dass** die Gestaltänderung des Formgedächtniselements (8) durch eine Temperaturänderung bewirkt wird.

11. Kraftfahrzeugschloss nach Anspruch 10, **dadurch gekennzeichnet, dass** das Kraftfahrzeugschloss eine Heizanordnung (19), vorzugsweise eine Spannungsquelle (20) und/oder eine Heizspule, für eine Temperaturänderung des Formgedächtniselements (8) umfasst, insbesondere, dass die Heizanordnung (19) das Formgedächtniselement (8) umfasst, vorzugsweise, dass das Formgedächtniselement (8) als Heizdraht dient.

12. Kraftfahrzeugschloss nach Anspruch 11, **dadurch gekennzeichnet, dass** das Kraftfahrzeugschloss eine lokale elektrische Energiequelle (21), vorzugsweise eine lokale Kondensatoranordnung, zur Versorgung der Heizanordnung (19) aufweist.

13. Kraftfahrzeugschloss nach einem der Ansprüche 1 bis 12, **dadurch gekennzeichnet, dass** die Antriebsstranganordnung (4), insbesondere der Hilfsantriebsstrang (10), eine Übertragungsanordnung (23) zum Übertragen der Gestaltänderung des Formgedächtniselements (8) in eine Aushebebewegung der Sperrklinke (2) aufweist, vorzugsweise, dass die Übertragungsanordnung (23) mit der Formgedächtnisanordnung (7) umlenkend in Eingriff steht, vorzugsweise, dass die Isolieranordnung (15) die Übertragungsanordnung (23) von dem Formgedächtniselement (8) isoliert.

14. Kraftfahrzeugschloss nach Anspruch 13, **dadurch gekennzeichnet, dass** die Formgedächtnisanordnung (7) mit der Übertragungsanordnung (23) derart, insbesondere mehrfach, angekoppelt ist, dass eine auf die Übertragungsanordnung (23) durch die Formgedächtnisanordnung (7) ausgeübte Bewegungskraft größer als eine Zugkraft des Formgedächtniselements (8) ist.

15. Kraftfahrzeugschloss nach einem der Ansprüche 13 oder 14, **dadurch gekennzeichnet, dass** die Übertragungsanordnung (23) eine Entkopplungsanordnung (25) umfasst, durch welche Entkopplungsanordnung (25) der Hauptantrieb (5) und/oder der Hilfsantrieb (6) antriebstechnisch von der Sperrklinke (2) entkoppelt werden kann.

## Claims

1. Motor vehicle lock with a lock latch (1), a pawl (2) for holding the lock latch (1) in at least one holding position, and a drive train arrangement (4) which comprises an electric main drive (5) for lifting out the pawl (2) and an auxiliary drive (6) for lifting out the pawl (2), wherein the main drive (5) is designed as an electric motor, **characterized in that** the auxiliary drive (6) comprises a shape memory arrangement (7) with a shape memory element (8) for lifting out the pawl (2) by changing the form of the shape memory element (8).

2. Motor vehicle lock according to Claim 1, **characterized in that** the drive train arrangement (4) comprises a main drive train (9) with the main drive (5) and an auxiliary drive train (10) with the auxiliary drive (6), and/or **in that** the drive train arrangement (4) comprises a main drive train (9) with a serial arrangement of the main drive (5) and of the auxiliary drive (6).

3. Motor vehicle lock according to Claim 1 or 2, **characterized in that** the shape memory arrangement (7) comprises an insulating arrangement (15) for temperature insulation of the shape memory element (8).

4. Motor vehicle lock according to Claim 3, **characterized in that** the insulating arrangement (15) encases the shape memory element (8) along a longitudinal direction directly, optionally apart from a clearance, preferably **in that** the insulating arrangement (15) comprises an insulating tube (16) arranged around the shape memory element (8).

5. Motor vehicle lock according to Claim 3 or 4, **characterized in that** the insulating arrangement (15), preferably the insulating tube (16), is arranged in a floating manner with respect to the shape memory element (8) along one direction, preferably along the longitudinal direction.

6. Motor vehicle lock according to one of Claims 3 to 5, **characterized in that** the insulating arrangement (15), preferably the insulating tube (16), is fastened to a housing of the motor vehicle lock, in particular **in that** the shape memory arrangement (7) is fastened to the housing of the motor vehicle lock by clamping the insulating arrangement (15), preferably the insulating tube (16).

7. Motor vehicle lock according to one of Claims 3 to 6, **characterized in that** the insulating arrangement (15), in particular the insulating tube (16), comprises a textile layer which is preferably coated, in particular coated with silicone rubber, preferably with a woven layer or with a braided layer, and/or **in that** the insulating arrangement (15), in particular the insulating tube (16), comprises a silicone layer, in particular is composed of silicone.

8. Motor vehicle lock according to one of Claims 3 to 7, **characterized in that** the insulating arrangement (15) comprises an end insulation (17) for at least one element end (18), preferably both element ends (18), of the shape memory element (8), in particular **in that** the insulating arrangement (15), preferably the insulating tube (16), is formed integrally.

9. Motor vehicle lock according to one of Claims 1 to 8, **characterized in that** the shape memory element (8) is formed in an elongate manner, preferably **in that** the change in form comprises a length change, in particular a length shortening, of the shape memory element (8).

10. Motor vehicle lock according to one of Claims 1 to 9, **characterized in that** the changing form of the shape memory element (8) is brought about by a temperature change.

11. Motor vehicle lock according to Claim 10, **characterized in that** the motor vehicle lock comprises a heating arrangement (19), preferably a voltage source (20) and/or a heating coil, for a temperature change of the shape memory element (8), in particular **in that** the heating arrangement (19) comprises the shape memory element (8), preferably **in that** the shape memory element (8) serves as a heating wire.

12. Motor vehicle lock according to Claim 11, **characterized in that** the motor vehicle lock has a local electric energy source (21), preferably a local capacitor arrangement, for supplying the heating arrangement (19).

13. Motor vehicle lock according to one of Claims 1 to 12, **characterized in that** the drive train arrangement (4), in particular the auxiliary drive train (10), has a transfer arrangement (23) for transferring the changing form of the shape memory element (8) into a lifting-out movement of the pawl (2), preferably **in that** the transfer arrangement (23) is in engagement with the shape memory arrangement (7) in a deflecting manner, preferably **in that** the insulating arrangement (15) insulates the transfer arrangement (23) from the shape memory element (8).

14. Motor vehicle lock according to Claim 13, **characterized in that** the shape memory arrangement (7) is coupled, in particular multiple times, to the transfer arrangement (23) in such a manner that a movement force exerted on the transfer arrangement (23) by the shape memory arrangement (7) is greater than a tensile force of the shape memory element (8).

15. Motor vehicle lock according to either of Claims 13 and 14, **characterized in that** the transfer arrangement (23) comprises a decoupling arrangement (25), by means of which decoupling arrangement (25) the main drive (5) and/or the auxiliary drive (6) can be decoupled from the pawl (2) in terms of drive.

## Revendications

1. Serrure de véhicule automobile, comprenant un loquet de serrure (1), un cliquet d'arrêt (2) destiné à maintenir le loquet de serrure (1) dans au moins une position de maintien, et un arrangement de chaîne cinématique (4), qui comporte un entraînement principal (5) électrique destiné à soulever le cliquet d'arrêt (2) et un entraînement auxiliaire (6) destiné à soulever le cliquet d'arrêt (2), l'entraînement principal (5) étant réalisé sous la forme d'un moteur électrique **caractérisée en ce**
**que** l'entraînement auxiliaire (6) comporte un arrangement à mémoire de forme (7) pourvu d'un élément à mémoire de forme (8) destiné à soulever le cliquet d'arrêt (2) par un changement de configuration de l'élément à mémoire de forme (8).

2. Serrure de véhicule automobile selon la revendication 1, **caractérisée en ce que** l'arrangement de chaîne cinématique (4) comporte une chaîne cinématique principale (9) pourvue de l'entraînement principal (5) et une chaîne cinématique auxiliaire (10) pourvue de l'entraînement auxiliaire (6) et/ou **en ce que** l'arrangement de chaîne cinématique (4) comporte une chaîne cinématique principale (9) pourvue d'un arrangement en série de l'entraînement principal (5) et de l'entraînement auxiliaire (6).

3. Serrure de véhicule automobile selon la revendication 1 ou 2, **caractérisée en ce que** l'arrangement à mémoire de forme (7) comporte un arrangement d'isolation (15) destiné à l'isolation thermique de l'élément à mémoire de forme (8).

4. Serrure de véhicule automobile selon la revendication 3, **caractérisée en ce que** l'arrangement d'isolation (15) gaine directement, le cas échéant avec un jeu, l'élément à mémoire de forme (8) le long d'une direction longitudinale, de préférence **en ce que** l'arrangement d'isolation (15) comporte un boyau isolant (16) disposé autour de l'élément à mémoire de forme (8).

5. Serrure de véhicule automobile selon la revendication 3 ou 4, **caractérisée en ce que** l'arrangement d'isolation (15), de préférence le boyau isolant (16), est disposé le long d'une direction, de préférence le long de la direction longitudinale, de manière flottante par rapport à l'élément à mémoire de forme (8).

6. Serrure de véhicule automobile selon l'une des revendications 3 à 5, **caractérisée en ce que** l'arrangement d'isolation (15), de préférence le boyau isolant (16), est fixé à un boîtier de la serrure de véhicule automobile, notamment **en ce que** l'arrangement à mémoire de forme (7) est fixé au boîtier de la serrure de véhicule automobile en coinçant l'arrangement d'isolation (15), de préférence le boyau isolant (16).

7. Serrure de véhicule automobile selon l'une des revendications 3 à 6, **caractérisée en ce que** l'arrangement d'isolation (15), notamment le boyau isolant (16), comporte une couche en textile, de préférence pourvue d'un revêtement de tissu ou pourvue d'un revêtement de treillis, de préférence enduite, notamment enduite de caoutchouc de silicone et/ou **en ce que** l'arrangement d'isolation (15), notamment le boyau isolant (16), comporte une couche de silicone, notamment se compose de silicone.

8. Serrure de véhicule automobile selon l'une des revendications 3 à 7, **caractérisée en ce que** l'arrangement d'isolation (15) comporte une isolation d'extrémité (17) pour au moins une extrémité d'élément (18), de préférence les deux extrémités d'élément (18), de l'élément à mémoire de forme (8), notamment **en ce que** l'arrangement d'isolation (15), de préférence le boyau isolant (16), est réalisé d'un seul tenant.

9. Serrure de véhicule automobile selon l'une des revendications 1 à 8, **caractérisée en ce que** l'élément à mémoire de forme (8) est de forme allongée, de préférence **en ce que** le changement de configuration comprend un changement de longueur, notamment un raccourcissement de longueur, de l'élément à mémoire de forme (8).

10. Serrure de véhicule automobile selon l'une des revendications 1 à 9, **caractérisée en ce que** le changement de configuration de l'élément à mémoire de forme (8) est provoqué par un changement de température.

11. Serrure de véhicule automobile selon la revendication 10, **caractérisée en ce que** la serrure de véhicule automobile comporte un arrangement de chauffage (19), de préférence une source de tension (20) et/ou une bobine chauffante, pour un changement de température de l'élément à mémoire de forme (8), notamment **en ce que** l'arrangement de chauffage (19) comporte l'élément à mémoire de forme (8), de préférence **en ce que** l'élément à mémoire de forme (8) sert de fil chauffant.

12. Serrure de véhicule automobile selon la revendication 11, **caractérisée en ce que** la serrure de véhicule automobile possède une source d'énergie électrique (21) locale, de préférence un arrangement de condensateur local, destiné à l'alimentation de l'arrangement de chauffage (19).

13. Serrure de véhicule automobile selon l'une des revendications 1 à 12, **caractérisée en ce que** l'arrangement de chaîne cinématique (4), notamment la chaîne cinématique auxiliaire (10), possède un arrangement de transmission (23) destiné à transmettre le changement de configuration de l'élément à mémoire de forme (8) dans un mouvement de levage du cliquet d'arrêt (2), de préférence **en ce que** l'arrangement de transmission (23) se trouve en prise de déviation avec l'arrangement à mémoire de forme (7), de préférence **en ce que** l'arrangement d'isolation (15) isole l'arrangement de transmission (23) de l'élément à mémoire de forme (8).

14. Serrure de véhicule automobile selon la revendication 13, **caractérisée en ce que** l'arrangement à mémoire de forme (7) est accouplé à l'arrangement de transmission (23), notamment plusieurs fois, de telle sorte qu'une force de mouvement exercée sur l'arrangement de transmission (23) par l'arrangement à mémoire de forme (7) est supérieure à une force de traction de l'élément à mémoire de forme (8).

15. Serrure de véhicule automobile selon l'une des revendications 13 et 14, **caractérisée en ce que** l'arrangement de transmission (23) comporte un arrangement de découplage (25), arrangement de découplage (25) par le biais duquel l'entraînement principal (5) et/ou l'entraînement auxiliaire (6) peuvent être désaccouplés cinématiquement du cliquet d'arrêt (2).
